# DEMANDE DE BREVET EUROPEEN

(11) **EP 1 844 977 A2**
(43) Date de publication de la demande: **17.10.2007**
(21) Numéro de dépôt: 07300924.3
(22) Date de dépôt: 04.04.2007
(51) Int. Cl.: B60N 2/30

(54) **Dispositif de protection d'une tige pour un siège**

(30) Priorité: 11.04.2006 FR 0651306
(71) Demandeur: PEUGEOT CITROËN AUTOMOBILES S.A., 78140 Velizy Villacoublay (FR)
(72) Inventeur: Bouvard, Martial, 25680 Rougemont (FR)
(74) Mandataire: Couillard, Yann Luc Raymond

(57) **Abrégé**

L'invention se rapporte à un dispositif de protection (27) pour une tige (25) en mouvement comprenant une pièce principale (29, 31, 41) de longueur sensiblement inférieure à ladite tige. Selon l'invention, ladite pièce principale est montée coaxialement à ladite tige pour substituer le glissement de la tige (25) sur une surface (23) par la rotation du dispositif de protection (27).

L'invention trouve son application notamment dans le domaine des sièges.

## Description

L'invention se rapporte à un dispositif de protection d'une tige et plus particulièrement un tel dispositif appliqué pour la tige appartenant à un siège.

Les véhicules automobiles comportent des sièges qui proposent de plus en plus de modularité. II est désormais classique qu'un siège, même au deuxième rang, soit individuel et mobile selon plusieurs directions. II peut ainsi fréquemment pouvoir être replié en portefeuille, c'est-à-dire passer successivement par le pliage du dossier contre l'assise puis la rotation de l'assise vers les sièges avant. Pour assister ce mouvement de rotation, il est connu d'avoir une lame montée sur ressorts afin de favoriser la rotation de l'assise mais également de bloquer l'assise en fin de rotation. Cependant, cette lame peut ponctuellement arracher le plancher duveteux sur lequel elle glisse et même s'arc-bouter dessus en empêchant ladite rotation.

Le but de la présente invention est de pallier tout ou partie les inconvénients cités précédemment en proposant un dispositif capable d'améliorer l'assistance au pliage du siège.

A cet effet, l'invention se rapporte à un dispositif de protection pour une tige en mouvement comprenant une pièce principale de longueur sensiblement inférieure à ladite tige caractérisé en ce que ladite pièce principale est montée coaxialement à ladite tige pour substituer le glissement de la tige sur une surface par la rotation du dispositif de protection.

Conformément à d'autres caractéristiques avantageuses de l'invention :
- le dispositif comporte une deuxième pièce principale montée sur la première de manière à former une surface distale de forme sensiblement cylindrique ;
- dans une première variante, la première pièce principale comporte une section sensiblement en forme de Y dont une des concavités recouvre partiellement la tige ;
- la deuxième pièce principale comporte une section sensiblement en forme de W dont les extrémités distales recouvrent au moins partiellement ladite première pièce et, l'extrémité proximale recouvre partiellement ladite tige ;
- dans une deuxième variante les première et deuxième pièces principales sont identiques pour faciliter leur industrialisation ;
- chaque pièce principale forme sensiblement un demi-cylindre sur lesquels courent une rainure et une nervure de formes correspondantes.

L'invention se rapporte également à un système de poussée contre une surface comportant une base fixe et des moyens élastiques propres à se détendre pour éloigner la base fixe de ladite surface caractérisé en ce que les moyens élastiques comportent une tige comprenant un dispositif de protection conforme à l'une des variantes précédentes pour permettre de diminuer les frottements des moyens élastiques contre ladite surface.

Enfin, l'invention se rapporte à un siège comprenant une assise montée mobile sur un plancher et un dossier articulé sur ladite assise caractérisé en ce que le dessous de l'assise comporte un système de poussée conforme à la variante ci-dessus pour permettre une assistance à la mobilité du siège qui ne détériore pas ledit plancher.

D'autres particularités et avantages ressortiront clairement de la description qui en est faite ci-après, à titre indicatif et nullement limitatif, en référence aux dessins annexés, dans lesquels :
- la figure 1 est une vue en coupe d'un siège plié en portefeuille ;
- la figure 2 est une vue en perspective du système de poussée ;
- la figure 3 est une vue en perspective du dispositif de protection sur une tige ;
- la figure 4 est une vue de deux pièces principales partiellement assemblées à la tige ;
- la figure 5 est une vue de deux pièces principales non assemblées selon une première variante.
- la figure 6 est une vue de deux pièces principales non assemblées selon une deuxième variante.

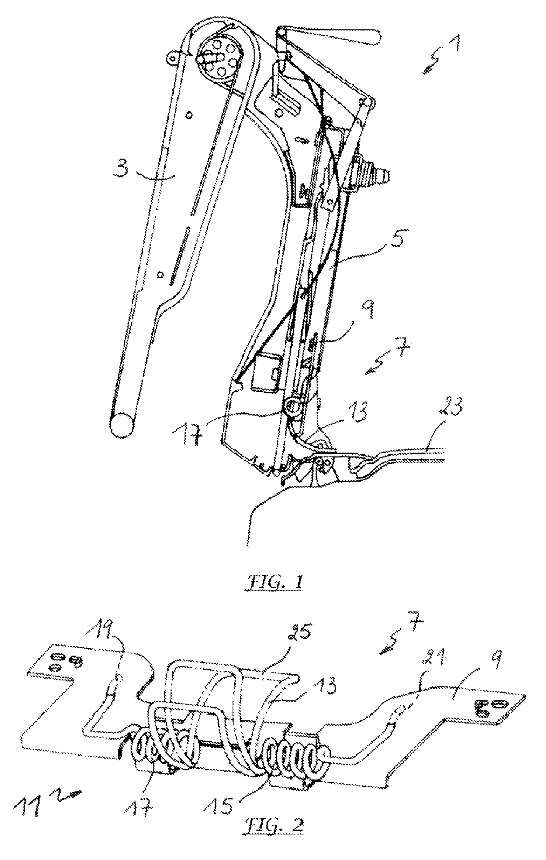

Comme illustré à la figure 1, on peut voir un siège généralement annoté 1. Il comporte un dossier 3 et une assise 5 qui sont pliés l'un en vis-à-vis de l'autre et sont sensiblement verticaux. Cette position est dite « en portefeuille ». Afin d'assister le mouvement vers cette position mais également pour la rendre stable, on utilise un système de poussée 7.

Comme illustré aux figures 1 et 2, le système de poussée 7 comporte principalement une platine 9 et des moyens élastiques 11. Le platine 9 est montée fixe sur la face inférieure de l'assise 5, c'est-à-dire la face la plus éloignée du dossier 3 à la figure 1, et court sensiblement selon sa largeur. Elle suit ainsi les mouvements de l'assise 5 et est utilisée comme base, c'est-à-dire comme point d'appui, aux moyens élastiques 11.

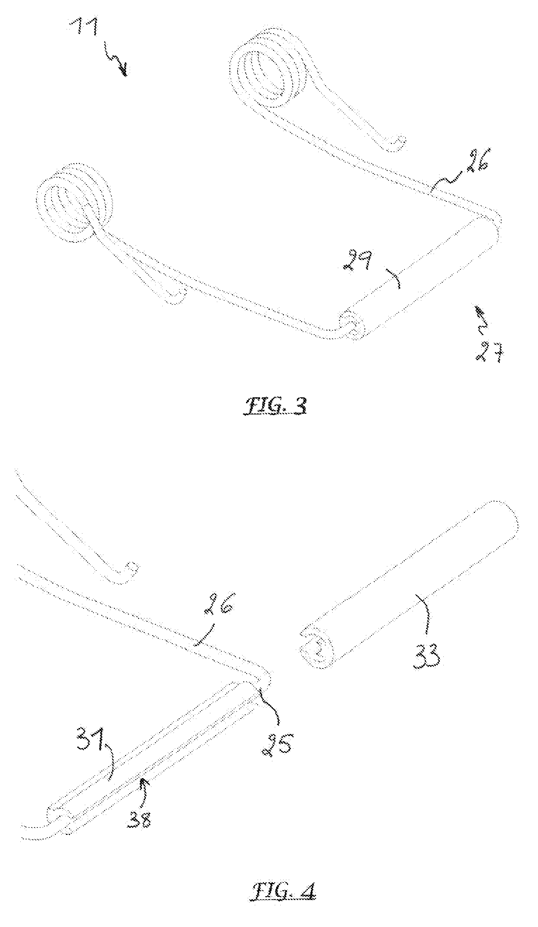

Les moyens élastiques 11 comportent principalement un organe d'appui 13, deux parties torsadées 15, 17 et deux fixations 19, 21. Les fixations 19 et 21 sont utilisées aux extrémités des moyens élastiques 11 pour attacher ces derniers fixement à la platine 9. Chaque fixation 19 et 21 peut consister, comme illustré aux figures 2 et 3, en une chicane qui coopère avec un perçage réalisé sur la platine 9. Préférentiellement, les moyens élastiques 11 sont constitués d'une seule pièce en usinant, par déformations, un tube plein métallique.

Les parties torsadées 15, 17 forment les moyens de stockage mécanique d'énergie, elles sont continuellement sous contrainte afin de pouvoir délivrer, même dans la position de la figure 1 (position où elles sont le plus détendues), une force d'assistance. Elles comportent chacune plusieurs spires et sont sensiblement colinéaires afin de conjuguer leur force sur l'organe d'appui 13.

L'organe d'appui 13, de forme sensiblement en U, utilise sa base 25 pour entrer en contact avec le plancher 23 du véhicule automobile. L'organe d'appui 13 permet donc par détente des parties torsadées 15, 17 de pousser l'assise 5 de façon continue afin d'assister sa rotation. Lors du déplacement de l'assise 5, l'organe d'appui 13 glisse ainsi le long du plancher 23 tout en poussant l'assise 5 en permanence. II permet également, dans sa position de la figure 1, de bloquer en position sensiblement verticale l'assise 5 et le dossier 3.

Selon l'invention afin d'éviter d'arracher le revêtement duveteux du plancher 23 sur lequel l'organe d'appui 13 glisse (mais également pour éviter qu'il ne s'arc-boute dessus), la partie sensiblement rectiligne 25 en contact avec le plancher 23, appelée ci-après tige, comporte un dispositif de protection 27. Comme illustré à la figure 3, le dispositif de protection 27 comporte un ensemble 29 sensiblement cylindrique qui est monté coaxialement sur la tige 25 afin de servir d'intermédiaire entre la tige 25 et le plancher 23. Par conséquent selon l'invention, on remplace le glissement de la tige 25 sur le plancher 23 par une rotation au niveau proximal de l'ensemble 29 autour de la tige 25 et au niveau distal contre la plancher 23. Ainsi, avantageusement, même si le plancher 23 comporte un duvet ou des irrégularités surfaciques, le dispositif de protection 27 les effacera sans s'arc-bouter.

Préférentiellement selon l'invention, l'ensemble 29 comporte deux pièces principales 31, 33 et 41, 43 pour permettre le montage de l'ensemble après fabrication des moyens élastiques 11. C'est une caractéristique de cette invention de pouvoir être montée après fabrication. En effet, la fabrication des moyens élastiques 11 nécessite des températures hautes pour la protection anti-corrosion et un maximum de surface de préhension pour passer les efforts conséquents de cintrage. Cela permet également l'amélioration de l'assistance au pliage du siège 1 en après-vente. Il suffit alors de monter le dispositif de protection 27 sur la tige 25.

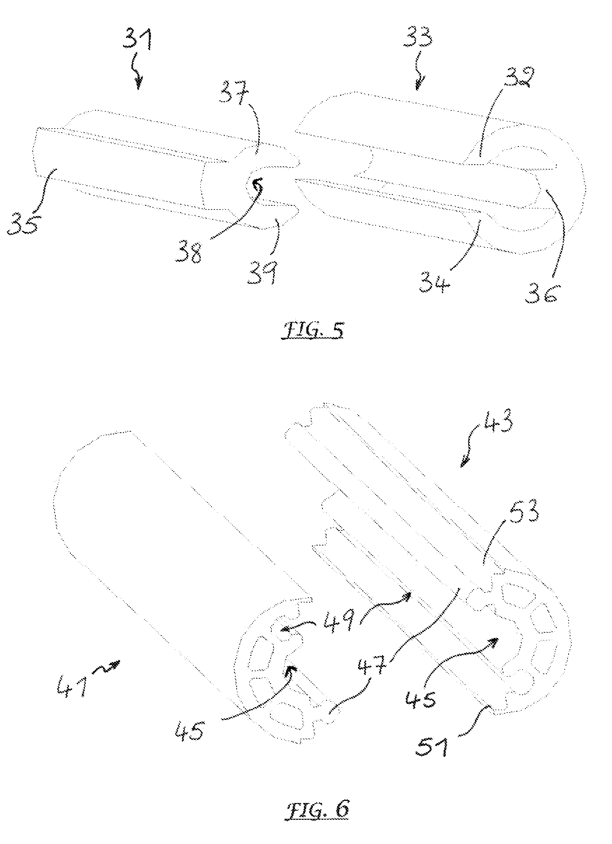

Comme illustré aux figures 4 et 5, selon une première variante, l'ensemble 29 comporte une première pièce principale 31 et une deuxième pièce principale 33. La première pièce principale 31 est un profilé dont la section est sensiblement en forme de Y dont la partie verticale 35 est sensiblement radiale à la tige 25 et dont les deux autres parties 37, 39 enjambe la tige 25. La section peut également être assimilée à une extrémité de clé plate pour écrou dont la concavité 38 des parties utiles 37 et 39 enjambe la tige 25. La deuxième pièce principale 33 est un profilé dont la section est sensiblement en forme de W dont les extrémités distales 32 et 34 recouvrent au moins partiellement la première pièce 31 (notamment ses parties 37 et 39) et, l'extrémité proximale 36 recouvre partiellement la tige 25.

Le montage de l'ensemble 29 selon la première variante va maintenant être expliqué en référence à la figure 4. Comme illustré à cette figure, dans un premier temps, la première pièce principale 31 est préalablement montée par glissement de la tige 25 à l'intérieur de la concavité 38 formée par les parties 37 et 39 jusqu'à ce qu'elle y bute. Dans un deuxième temps, les sections de première et deuxième pièce principale 31 et 33 sont amenées en quasi vis-à-vis comme illustré à la figure 4. Dans un troisième temps, la deuxième pièce principale 33 est coulissée le long de la première 31 afin de former l'ensemble 29 sensiblement cylindrique. Cela est rendu possible par la distance particulière de vis-à-vis entre les extrémités 32 et 34 de la deuxième pièce principale 33 et donc par l'épaisseur particulière de la partie 35 de la première pièce principale 31. Préférentiellement, la distance de vis-à-vis est sensiblement supérieure au diamètre du retour 26 de la tige 25.

Comme illustré à la figure 6, selon une deuxième variante, l'ensemble 29 comporte une première pièce principale 41 et une deuxième pièce principale 43 qui sont identiques. Cette deuxième variante est notamment destinée à être facilement industrialisée par extrusion d'un profilé unique dont on coupe deux parties de longueurs équivalentes. Chaque pièce principale 41 et 43 est ainsi un profilé formant sensiblement un demi-cylindre dont la partie proximale 45 est utilisée pour recouvrir la tige 25. chaque pièce 41 et 43 comporte une nervure 47 et une rainure 49 pour qu'elles puissent s'attacher l'une sur l'autre. Préférentiellement, selon l'invention, chaque pièce 41 et 43 comporte également un épaulement 51 et une mortaise 53 pour qu'elles offrent un interstice dont le volume est minimal.

Le montage de l'ensemble 29 selon la deuxième variante va maintenant être expliqué. Dans un premier temps, la première pièce principale 41 est montée par glissement de la tige 25 vers sa partie proximale 45 jusqu'à ce qu'elle y bute. Dans un deuxième temps, la deuxième pièce principale 43 est amenée en vis-à-vis de la première 41 comme illustré à la figure 5. Dans un troisième temps, les deux pièces 41 et 43 sont rapprochées afin de les rendre solidaire l'une de l'autre. Cela est rendu possible par emboîtement respectif de chaque rainure 49 avec chaque nervure 47 et incidemment de chaque épaulement 51 avec chaque mortaise 53.

Bien entendu, la présente invention ne se limite pas à l'exemple illustré mais est susceptible de diverses variantes et modifications qui apparaîtront à l'homme de l'art. En particulier, les formes des pièces principales 31, 33, 41 et 43 peuvent différer. De même, les nervures 47 et les rainures 49 peuvent être de configuration différentes.

## Revendications

1. Siège (1) pour véhicule automobile comprenant une assise (5) montée mobile sur un plancher (23) et un dossier (3) articulé sur ladite assise, le dessous de l'assise (5) comportant un système de poussée (7) comprenant une base fixe (9) et des moyens élastiques (11) propres à se détendre pour éloigner la base fixe (9) de ladite surface afin de permettre une assistance à la mobilité du siège (1) **caractérisé en ce que** les moyens élastiques (11) comportent une tige (25) comprenant un dispositif de protection (27) pour permettre de diminuer les frottements des moyens élastiques (11) contre la surface (23).

2. Siège (1) selon la revendication 1, **caractérisé en ce que** le dispositif de protection (27) comporte une pièce principale (29, 31, 41) de longueur sensiblement inférieure à ladite tige et montée coaxialement à ladite tige pour substituer le glissement de la tige (25) sur une surface (23) par la rotation du dispositif de protection (27) afin de ne pas détériorer le plancher (23).

3. Siège (1) selon la revendication 2, **caractérisé en ce qu'**il comporte une deuxième pièce principale (33, 43) montée sur la première (31, 41) de manière à former une surface distale de forme sensiblement cylindrique.

4. Siège (1) selon la revendication 3, **caractérisé en ce que** la première pièce principale (31) comporte une section sensiblement en forme de Y dont une (38) des concavités recouvre partiellement la tige (25).

5. Siège (1) selon la revendication 3 ou 4, **caractérisé en ce que** la deuxième pièce principale (33) comporte une section sensiblement en forme de W dont les extrémités distales (32, 34) recouvrent au moins partiellement ladite première pièce et, l'extrémité proximale (36) recouvre partiellement ladite tige.

6. Siège (1) selon la revendication 3, **caractérisé en ce que** les première et deuxième pièces principales (41, 43) sont identiques pour faciliter leur industrialisation.

7. Siège (1) selon la revendication 6, **caractérisé en ce que** chaque pièce principale (41, 43) forme sensiblement un demi-cylindre sur lequel courent une rainure (49) et une nervure (47) de forme correspondante.

8. Véhicule automobile **caractérisé en ce qu'**il comporte un siège (1) conforme à l'une des revendications précédentes.
